# EUROPÄISCHE PATENTSCHRIFT

(11) **EP 3 291 939 B1**
(45) Veröffentlichungstag und Bekanntmachung des Hinweises auf die Patenterteilung: **20.07.2022**
(21) Anmeldenummer: 16722048.2
(22) Anmeldetag: 27.04.2016
(51) Int. Cl.: B23H 9/00, B23H 11/00, B29C 48/68

(54) **ERODIEREN DER INNENVERZAHNUNG AN PLANETWALZENEXTRUDERN**
SPARK EROSION OF THE INTERNAL TOOTHING OF PLANETARY ROLLER EXTRUDERS
ÉROSION DE LA DENTURE INTÉRIEURE SUR DES EXTRUDEUSES PLANÉTAIRES

(30) Priorität: 03.05.2015 DE 102015005532
(43) Veröffentlichungstag der Anmeldung: 14.03.2018
(73) Patentinhaber: Entex Rust & Mitschke GmbH, 44805 Bochum (DE)
(72) Erfinder: RUST, Harald, 44805 Bochum (DE)
(74) Vertreter: Kaewert, Klaus
(86) Internationale Anmeldenummer: PCT/EP2016/000683
(87) Internationale Veröffentlichungsnummer: WO 2016/177453

(56) Entgegenhaltungen:
- DE-A1- 4 436 803
- DE-A1- 19 812 889
- DE-A1-102010 026 535
- US-A1- 2007 080 145

## Beschreibung

Die Erfindung betrifft ein Verfahren und eine Vorrichtung zur Herstellung der Innenverzahnung an Gehäusen von Planetwalzenextrudern mit einer Zentralspindel, Planetenspindeln und dem innen verzahnten Gehäuse, wobei die Planetenspindeln sowohl mit der Zentralspindel als auch mit der Innenverzahnung kämmen und um die Zentralspindel umlaufen. Dabei wird die Zentralspindel angetrieben, während das Gehäuse stillsteht.

In früherer Zeit war das Planetwalzenextrudergehäuse unmittelbar verzahnt. In neuerer Zeit sind die Planetwalzenextrudergehäuse mit einer Buchse versehen, welche innen verzahnt ist.

In früherer Zeit erfolgte die Herstellung der Innenverzahnung durch Fräsen bzw. Wirbeln und Schleifen oder sogenanntes Ziehen. Je nach Ansprüchen an die Oberflächenbeschaffenheit der Zähne ist ein Schleifen als unverzichtbar angesehen worden. Mit der DE 3839621 A1 ist eine wesentliche Verbesserung der Herstellung aufgezeigt.

Alle Hersteller haben sich in der Vergangenheit der gleichen Verfahren bedient. Alle Extraderbetreiber haben gleichermaßen hergestellte Verzahnungen verwendet. Infolgedessen bestand bei allen Wettbewerbern bzw. Herstellern und Betreibern die gleiche Wettbewerbslage und kein Wettbewerbsdruck zur Änderung des Herstellungsvorganges.

In neuerer Zeit ist zur Innenverzahnung ein Funkenerodieren eingesetzt worden. Das Funkenerodierten (EDM) ist ein thermisches, abtragendes Fertigungsverfahren. Dieses Verfahren wird bei elektrisch leitfähigen Materialien eingesetzt. Dabei wird
das Werkstück unter Strom/Spannung gesetzt und eine Elektrode dort entlang geführt, wo eine Verformung stattfinden soll. An diesen Flächen bilden sich Funken, die zu der geführten Elektrode fliegen. Je nach Intensität des Stromes bzw. Höhe der Spannung ist der Funkenflug mehr oder weniger stark. Aufgrund der Funken bildet sich an der bearbeiteten Oberfläche eine Erosion, ein Materialabtrag. Vorteilhafterweise kann dieser Materialabtrag ganz genau gesteuert werden. Das schließt auch die extrem schwierig verlaufenden Zahnflanken einer Innenverzahnung eines Extrudergehäuses bzw. eine Innenverzahnung einer Buchse für ein Extrudergehäuse ein.

Die Herstellung von Verzahnungen mit Hilfe einer Funkenerodiereinrichtung ist durch verschiedene Veröffentlichungen an sich bekannt.

Im Einzelnen zeigt die EP OO77O97 A1 eine Vorrichtung zur Stirnverzahnung an Zahnrädern bzw. enthält diese Druckschrift keinen Hinweis auf eine Innenverzahnung.

Die DE 3618435 A1 zeigt einen Ritzelherstellung mittels eines Funkenerodierverfahrens. Dabei wird das Funkenerodieren nur für die Herstellung einer Außenverzahnung verwendet.

Die DE-Z Entwicklung elektrisch-thermischer Abtragung aus Betrieb 124 (1991), Heft 5, S.379-383 erläutert nur ganz allgemein die Einsatzbereiche des Funkenerodierens, ohne auf die Möglichkeiten der Herstellung einer Verzahnung einzugehen.

Die DE 3527282 A1 zeigt die Herstellung eines Kegelzahnrades mittels Funkenerodieren. Es wird ein Gegenstück erzeugt, das zwar als spiegelbildliche Abbildung bezeichnet wird, gleichwohl eine ungewöhnlich getriebefremde Form aufweist, d.h. nicht in einer Getriebeverbindung mit dem gewünschten Kegelzahnrad vorkommt.

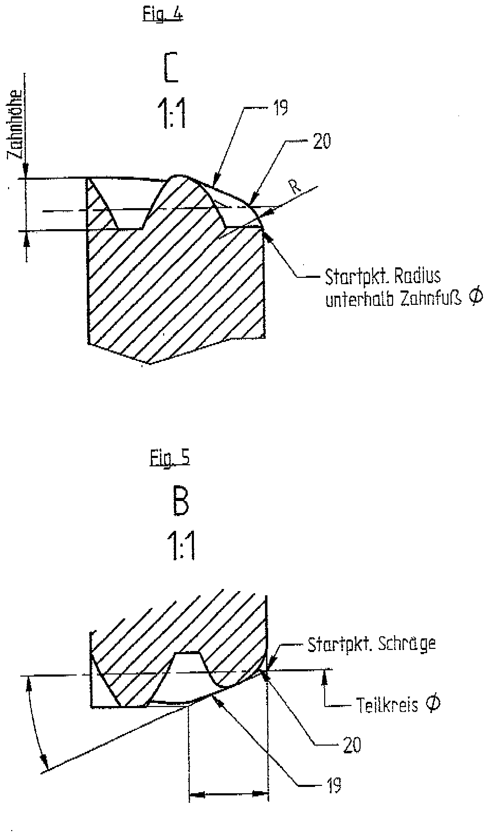

*Die* US200710080145 zeigt die Innenverzahnung eines großen Gewindeloches *durch Funkenerodieren. Dabei ist zur Verzahnung eine Elektrode11 vorgesehen, die als Gewindebolzen ausgebildet ist. Die als Gewindebolzen ausgebildete Elektrode hat einen Durchmesser, der nach* *Fig. 4* *kleiner als der halbe Innendurchmesser des Gewindeloches ist. Die Elektrode wird nach* *Fig. 4* *und den Absätzen 46 bis 49 in einer Vielzahl von Durchgängen an der Innenwand des Gewindeloches vorbeigeführt. **Die Elektrode führt nach Absatz 49 auf der Umlaufbahn keine Drehung um die eigene Achse aus.***

Weitere Veröffentlichungen finden sich in
DE102012008169, DE102007058174, DE19812889, DE19807089, DE10356423, DE10354172, DE4436803. Diese Veröffentlichungen zeigen die Herstellung der Innenverzahnung an Gehäuse bzw. Gehäusebuchsen mittels Funkenerodieren, wobei eine Elektrode verwendet wird, deren Verzahnung der Innenverzahnung unter Berücksichtigung eines notwendigen Abstandes zwischen dem Extrudergehäuse bzw. der Gehäusebuchse und der Elektrode nachgebildet ist, wobei die DE4436803 ein Verfahren gemäß dem Oberbegriff des Anspruchs 1 zeigt.

Die verwendete Elektrode kann zur Herstellung der gewünschten Zahnflankenform numerisch gesteuert werden. Günstig sind dabei Elektroden, welche nicht nur durch Bewegung entlang der X-Achse und Y-Achse zu jedem gewünschten Punkt geführt werden können, sondern auch durch Drehung um die Z-Achse eine Bewegung wie eine Planetspindel ausführen können.

Zur Durchführung des Verfahrens, wahlweise auch für die Herstellung von Spindeln, wird eine Vorrichtung verwendet, die zumindest einen vertikal bewegbaren sowie drehbaren Werkzeugschlitten für vertikal stehende Extrudergehäuse bzw. Gehäusebuchsen besitzt. Wenn damit die Extrudergehäuse und Extruderbuchsen aller vorkommenden Längen bearbeitet werden sollen, führt das zu erheblichen Bauhöhen der Vorrichtung, weil die Elektroden in die Gehäuse und Buchsen bis zu deren Ende dringen müssen und auch wieder aus den Gehäusen herausgezogen werden müssen. Je nach zu bearbeitender Stückzahl der Gehäuse und Buchsen kann eine Vorrichtung auch für Gehäuse und Buchsen bestimmt werden, die innerhalb eines eingeschränkten Längenbereiches liegen. Vorteilhaft sind größere Bauhöhe für die Vorrichtung, mindestens 3 m, im Regelfall jedoch 4 und 6m.

Im Übrigen werden vorzugsweise Elektroden für die erfindungsgemäße Herstellung eines verzahnten Werkstückes (Extrudergehäuse oder Gehäusebuchse) verwendet, welche in etwa den gleichen Querschnitt wie das mit dem Werkstück kämmende Gegenstück (Planetenspindel, auch Planetwalzenspindel genannt) besitzen. Für die Herstellung innenverzahnter Gehäuse eines Planetwalzenextruders eröffnet das eine überraschende Einsparung. In diesem Anwendungsfall wird zum Beispiel aus Graphit oder einem anderen Elektroden-(Erodier)werkstoff eine Planetwalzenspindel bestimmter Länge gefräst. Das geschieht in gleicher Weise und mit der gleichen Fräsbank wie beim Fräsen wirklicher Planetwalzenspindeln, allerdings unter Berücksichtigung eines für den Erodiervorgang notwendigen Spaltes zwischen dem zu bearbeitenden Werkstück und der Elektrode.

Dabei können alle relevanten Verzahnung, auch 45Grad-Evolventenverzahnungen, auch links oder rechtsdrehend, hergestellt werden Die bevorzugte Länge der Elektrodenspindel beträgt bis 200 mm. Die Länge kann unabhängig von der tatsächlichen Länge später verwendeter Planetwalzenspindeln sein. Sie kann deutlich kürzer sein. Die Elektrodenspindel kann darin mit entsprechender Steuerung wie die tatsächliche Planetwalzenspindel an der Gehäuseinnenfläche entlang bewegt werden, wobei erodierende Funkenübertritte an den Gehäusefläche/Buchsenflächen zur Elektrodenspindel entstehen. Durch wiederholtes Entlangführen der Elektrodenspindel entsteht eine immer tiefer werdende Abbildung der sich im Abstand von dem Werkstück bewegten Zähne der Elektrodenspindel im Gehäusemantel an dessen Innenseite.

Der Spalt zwischen Elektrode und Werkstückoberfläche kann 0,004 bis 0,5mm betragen.

Die Erodierung hängt von der Intensität ab. Maßgebend für die Intensität sind insbesondere Spannung, Frequenz, Dauer, Länge, Spaltbereite und Polung der Entladung. Über jeden dieser Parameter kann der Erodiervorgang beeinflußt werden. Die Spaltbreite ändert sich durch Verschleiß der Elektrode. Mit zunehmender Spaltbreite muß die Spannung erhöht werden, um eine gleiche Erodierleistung zu erzielen. Handlungsbedarf ist an der Stromaufnahme leicht erkennbar.

Als Elektrodenmaterial sind unter anderem bekannt: Kupfer, Messing, Graphit, Hartmetall und Kupferlegierungen.

Bei der Bearbeitung des Werkstückes ist mindestens in dem Spalt zwischen Werkstück und Elektrode ein Dielektrikum vorgesehen. Vorzugsweise steht das Werkstück in einem Bad mit Dielektrikum. Das Dielektrikum kann zum Beispiel ein elektrisch nicht leitendes Öl oder ein deionisiertes Wasser sein. Der Erodiervorgang ist auf andere Innenverzahnungen als die bei Planetwalzenextrudern übliche Innenverzahnungen übertragbar. Bei Planetwalzenextrudern führt das Erodieren zu extremen Kosteneinsparungen. Die bekannten Veröffentlichungen beschreiben ein Verfahren, bei dem eine im Querschnitt den Planetenspindeln nachgebildete Elektrode in einer Gehäusebuchse bzw. in dem Gehäuse positioniert und anschließend wie eine wirkliche Planetspindel unter Abtragung der Materialoberfläche solange an der Innenfläche der Buchse bzw. an der Innenfläche des Gehäuses unter Wahrung eines für die Funkenbildung notwendigen Abstandes abgewälzt wird, bis an der Innenfläche die gewünschte Verzahnung entstanden ist.

Aufgabe der Erfindung ist es, den Erodiervorgang zu verbessern.

Das wird mit den Merkmalen des Hauptanspruches erreicht.

Die Unteransprüche beschreiben bevorzugte Ausführungsbeispiele.

Nach der Erfindung sind die Elektroden an dem beim Einfahren der Elektrode in das Gehäuse bzw. in die Gehäusebuchse vorderen Ende(Elektrodenkopf) mit einer Rundung versehen. Von Vorteil ist auch, das Dielektrikum kontinuierlich oder in Intervallen abzuziehen und durch frisches Dielektrikum zu ersetzen, wobei das Abziehen vorzugsweise unter der Elektrode und/oder unter dem Werkstück(Extrudergehäuse bzw. Extruderbuchse) erfolgt.

Frisches Dielektrikum ist nach der Erfindung gereinigtes und/oder gekühltes Dielektrikum. Die Reinigung des Dielektrikums ist für die Qualität des Dielektrikums von Vorteil.

Mit der Kühlung des Dielektrikums wird ein Ausfallen von Material gefördert, das aus der Werkstückoberfläche beim Erodieren abgetragen wird.

All diese Vorteile ergänzen sich zu einem besonders leistungsfähigen Verfahren.

Die Rundung wird der Baugröße des Extruders und dem Verzahnungsmodul angepaßt.

Zur Kennzeichnung der Baugröße wird der Teilkreisdurchmesser der Innenverzahnung des Extrudergehäuses im vorliegenden Fall herangezogen. Die Baugröße 50 bezeichnet ein Extrudergehäuse, deren Innenverzahnung einen Teilkreisdurchmesser von 50mm aufweist; zur Baugröße 150 gehört ein Teilkreisdurchmesser von 150mm; zur Baugröße 350 gehört ein Teilkreisdurchmesser von 350mm; zur Baugröße 500 gehört ein Teilkreisdurchmesser von 500mm usw.

In Abhängigkeit von der Baugröße ergeben sich folgende Radien für Rundungen:

| Baugröße WZ | | Rundungsradius | |
|---|---|---|---|
| minimal | maximal | minimal | maximal |
| 50 | 150 | 2mm | 6mm |
| 150 | 300 | 5mm | 8mm |
| 350 | 400 | 5mm | 10mm |
| 500 | 1000 | 5mm | 20mm |

Die Rundung zeigt schon Wirkung, wenn sie oberhalb des Zahnfußes (zwischen Zahnkopf und Zahnfuß) der Verzahnung beginnt oder am Zahnfuß beginnt. Vorzugsweise beginnt die Rundung sogar unterhalb des Zahnfußes. Das heißt, der kleinste Elektrodendurchmesser an der Rundung ist kleiner als der Durchmesser der Elektrode am Zahnfuß der Verzahnung.

Entsprechendes gilt, wenn nur eine Schrägung an dem Elektrodenkopf vorgesehen ist. Entsprechendes gilt auch für eine Kombination aus Schrägung und Rundung am Elektrodenkopf.

Je weiter sich die Rundung am Elektrodenmantel erstreckt, desto schneller läßt sich eine vorteilhafte Erodierleistung erreichen. Vorzugsweise erstreckt sich die Rundung und/oder Schrägung für kleine Baugrößen mindestens 8mm und für große Baugrößen mindestens 30mm - beginnend von der Stirnfläche des Elektrodenkopfes - am Elektrodenmantel entlang.

Je weiter sich die Rundung am Elektrodenmantel erstreckte, desto weiter muß die Elektrode durch das zu bearbeitende Elektrodengehäuse bzw. durch die zu bearbeitende Buchse hindurch gefahren werden, um eine gleichmäßige Verzahnung zu bewirken.

Vorzugsweise erstreckt sich die Rundung für kleine Baugrößen höchstens 15mm und für große Baugrößen höchstens 60mm - beginnend von der Stirnfläche des Elektrodenkopfes - am Elektrodenmantel entlang.

Die Rundung erlaubt es, das Einfahren der Elektrode in die Gehäusebuchse bzw. in das Gehäuse sofort zum Erodieren optimal zu nutzen. Außerdem wird der Verschleiß der Elektrode vermindert.

Wenn die Elektrode sich in Richtung ihrer Z-Achse(Längsachse) gegen das Gehäuse oder dessen Buchse in Erodierstellung bewegt, entstehen größere Erodier-Flächen als ohne Rundung. Mit der größeren Erodier-Fläche ergibt sich auch bei gleichbleibender Spannung und sonstigen Rahmenbedingungen pro Flächeneinheit eine insgesamt größere Abtragleistung/Erodierleistung.

Wie oben beschrieben, kann die Elektrode unter Berücksichtigung des notwendigen Spaltes zwischen Werkstück und Elektrode einer Planetwalzenspindel nachgebildet sein. Dann wälzt sich die Elektrode wie eine Planetwalzenspindel bei dem Erodiervorgang auf der Innenfläche des Gehäuses bzw. auf der Innenfläche der Gehäusebuchse ab.

Vorzugsweise ist die Elektrode aber der Innenverzahnung des Gehäuses bzw. der Innenverzahnung der Buchse unter Berücksichtigung des notwendigen Spaltes zwischen Werkstück und Elektrode nachgebildet. Die Elektrode ähnelt danach einem Gewindeschneider, der beim Erodieren das Gewinde in die Gehäuseöffnung bzw. in den Hohlraum der Gehäusebuchse schneidet. Vorteilhafterweise kann die Innenverzahnung des Gehäuses bzw. der Gehäusebuchse mit einer oder mehreren Längsbewegungen/Hubbewegungen der Elektrode hergestellt werden. Bei Herstellung der Innenverzahnung mit einer einzigen Hubbewegung ist die Elektrode mit einer langen Rundung am Elektrodenkopf versehen, so daß die Verzahnung durch fortschreitende Vertiefung der Zahnlücken in einer Bewegung bzw. einem Hub fertig gestellt wird.

Bei der Herstellung der Verzahnung in mehreren Schritten können mehrere Elektroden zur Anwendung kommen, zum Beispiel mit einer Elektrode für eine grobe Bearbeitung (Schruppen) und einer weiteren Elektrode zu einer anschließenden Feinbearbeitung (Schlichten). Aber auch einzelne Bearbeitungen können schrittweise erfolgen. So kann die Grobbearbeitung (Schruppen) in mehreren Schritten, auch unter Verwendung mehrerer scheibenförmiger Elektroden erfolgen. Dabei kann es vorteilhaft sein, in einem ersten Schritt eine verschlissene scheibenförmige Elektrode oder eine Elektrode mit geringerem Außendurchmesser einzusetzen, um an der Gehäuseinnenfläche bzw, der Buchseninnenfläche eine anfängliche Vertiefung für die Zahnbildung zu verursachen. Danach kann in einem weiteren Schritt oder in mehreren weiteren Schritten die für die Zahnbildung notwendige Vertiefung in der Werkstückoberfläche vervollständigt werden.

Scheibenförmige Elektroden sind bei dem vorstehend beschriebenen Erodieren von Vorteil, bei dem die Elektrode unter Berücksichtigung des notwendigen Abstandes zur Innenfläche des Gehäuses bzw. zur Innenfläche der Buchse eine Abbildung der Innenverzahnung des Gehäuses bzw, der Gehäusebuchse beinhalten. Scheibenförmige Elektroden haben vorzugsweise eine Dicke von 30mm bis 120mm. Die Dicke von 30mm gehört zu einer kleinen Baugröße; die Dicke von 120mm zu einer großen Baugröße. Bei kleiner Baugröße haben scheibenförmige Elektroden geringer Dicke noch ausreichende Festigkeit. Bei größerer Baugröße wird dem durch eine größere Dicke Rechnung getragen.

Für die vorstehenden scheibenförmigen Elektroden ist es ausreichend, die Elektroden mit einer Stange/Führungsstange an einem seitlich vom Extrudergehäuse bzw. seitlich von der Buchse parallel zur Buchsenmitte verfahrbaren Schlitten zu halten. Durch Bewegung des Schlittens kann die Elektrode in das Extrudergehäuse bzw. die Buchse eintauchen und aus dem. Gehäuse bzw. der Buchse herausfahren. Durch Drehung der Führungsstange kann der Elektrode zugleich die Bewegung vermittelt werden, die notwendig ist, um eine Verzahnung mit einer gewünschten Neigung der Zähne zu erzeugen.

Bei Verwendung einer Elektrode, die in der oben beschriebenen Form nach Art einer Planetwalzenspindel bewegt wird, bestehen zur Einstellung des Abstandes zwischen der Innenfläche des Gehäuses bzw, der Innenfläche der Buchse und der Elektrode verschiedene Möglichkeiten.

Es ist möglich, die Lagerung der drehbaren Führungsstange zugleich in einer exzentrischen, drehbaren Lagerschale zu lagern. Die Führungsstange hält die Elektrode. Durch Drehung der die drehbewegliche Führungsstange und deren Schlitten tragenden Lagerung kann der Abstand der Stange zu der Innenwand des Extrudergehäuses bzw. zu der Innenwand der Buchse für das Extrudergehäuse geändert werden. Das kann genutzt werden, um die Elektrode immer weiter gegen die Innenwand des Gehäuses bzw. gegen die Innenwand der Buchse anzustellen und die Zahnlücken zu vertiefen, bis die Innenfläche des Extrudergehäuses bzw. die Innenfläche der Buchse die gewünschte Verzahnung zeigt.

Anstelle der Drehung zur Abstandsänderung kann auch eine geradlinige Bewegung zur Abstandsänderung genutzt werden. Dann ist der die Führungsstange tragende Schlitten in einer Geradführung gehalten.

Vorzugsweise ist zur Abstandsänderung das zu der Erodiervorrichtung gehörige Becken/Behälter, das mit einem Dielektrikum gefüllt ist und das Extrudergehäuse bzw. die Gehäusebuchse aufnimmt, drehbeweglich gelagert. Dabei besitzt die Becken/Behälterdrehachse zur Drehachse der Führungsstange einen Abstand.

Das Becken/Behälter kann anstelle der Drehbewegung auch eine geradlinige Bewegung ausführen. Das Becken/Behälter ist dann in einer Geradführung gehalten.

Alle Bewegungsantriebe (sowohl die Antriebe im Falle einer wie eine Planetwalzenspindel bewegten Elektrode wie auch im Falle einer Elektrode, die unter Berücksichtigung des notwendigen Spaltes/Abstandes eine Abbildung der Innenverzahnung beinhalten) sind vorzugsweise digital steuerbar.

Und an eine gemeinsame Datenverarbeitungsanlage angeschlossen, so daß jede Position der Elektrode und aller anderen bewegten Teile speicherbar ist und jede einmal eingenommene Position nach deren Verlassen wieder einnehmbar ist. Außerdem kann jede Bewegung in die Datenverarbeitungsanlage einprogrammiert werden. Das gilt auch für jede notwendige Bewegung der Elektrode und aller anderen bewegten Teile.

Bei einer gegen die Gehäuseinnenwand bzw. die Buchseninnenwand anstellbaren scheibenförmigen Elektrode,
welche durch die Gehäuseöffnung hindurch und aus dem Gehäuse wieder heraus gefahren werden kann bzw. durch die Öffnung der Buchse hindurch und wieder aus der Buchse heraus gefahren werden kann,
ist es von Vorteil, wenn die scheibenförmige Elektrode an beiden Enden mit einer Schrägung und/oder Rundung versehen ist. Dann kann die Elektrode nicht nur vor dem Einfahren gegen die Innenwand des Gehäuses bzw. gegen die Innenwand der Buchse angestellt werden, sondern auch nach dem folgenden Erodiervorgang leicht verstellt werden, wenn die Elektrode aus dem Gehäuse bzw. der Buchse herausgefahren worden ist. Dann kann, jede Längsbewegung der Elektrode zu einem Arbeitshub genutzt werden.

Für den Fall der Verwendung einer wie eine Planetspindel im Extrudergehäuse bzw. in der Gehäusebuchse bewegten Elektrode kann es von Vorteil sein, den Erodiervorgang auf die Umlaufbewegung der Elektrode in dem Extrudergehäuse bzw. in der Gehäusebuchse zu beschränken. Dazu ist eine größere Elektrodenlänge günstig, damit die Elektrode auf einer größeren Länge Funken in dem Extrudergehäuse bzw. in der Gehäusebuchse erzeugen kann. Eine maximale Wirkungslänge der Elektrode entsteht, wenn die wie eine Planetspindel bewegte Elektrode eine Länge aufweist, die gleich oder geringfügig größer als die Gehäuselänge bzw. die Länge der Buchse ist. Die Elektrode kann nach der Positionierung in dem Extrudergehäuse bzw. in der Buchse wie eine Planetspindel auf der Gehäuseinnenfläche bzw. auf der Innenfläche der Buchse abgewälzt werden.

Vorzugsweise wird in dem Spalt zwischen dem Extrudergehäuse bzw. der Gehäusebuchse und der Elektrode eine nach unten gerichtete Flüssigkeitsströmung erzeugt. Die Flüssigkeitsströmung entsteht durch einen Flüssigkeitsabzug an der Unterseite des Beckens/Behälters der Erodiervorrichtung. Dies hat mehrere Vorteile: ein Vorteil ist, daß abgetragenes Material nach unten aus dem Behälter abgezogen werden kann. Das erlaubt eine einfache Reinigung des Dielektrikums mit einem oder mehreren Filtern. Außerdem kann das abgezogene Dielektrikum gekühlt werden und in das Becken/Behälter rückgeführt werden. Die Zugabe gekühlten Dielektrikums läßt das beim Erodieren von dem Gehäuse bzw. der Buchse abgetragene Material, das aufgrund der Erwärmung bei der Funkenbildung verflüssigt worden ist, wieder erkalten und aus dem Dielektrikum ausfallen.

Vorzugsweise wird die Zugabe an frischem Dielektrikum anhand des Badspiegels im Becken/Behälter der Vorrichtung geregelt.

Für einen Elektrodenwechsel ist es von Vorteil, zwischen der Elektrode und deren Führungsstange eine Kupplung vorzusehen. Die Kupplung erlaubt eine schnelle Trennung der Elektrode von der Führungsstange und eine schnelle Verbindung einer anderen Elektrode mit der Führungsstange.

Vorzugsweise wird die Führungsstange mit der Elektrode zum Elektrodenwechsel aus dem Becken/Behälter gefahren, so daß die Elektrode und deren Kupplung gut zugänglich sind.

Von Vorteil ist dabei ein Elektrodenwechsler.

Der Elektrodenwechsler kann ein digital gesteuerter Roboter sein.

Vorzugweise ist als Roboter ein Tisch mit diversen, am Umfang verteilten Ausnehmungen für Elektroden vorgesehen. Der Tisch ist drehbeweglich und verschiebbar, so daß der Tisch unter die aus dem Becken/Behälter herausgefahrene Elektrode gefahren werden kann und die auszuwechselnde Elektrode in einer passenden Ausnehmung aufnehmen kann. Dann wird die Kupplung betätigt, so daß sich die Elektrode von der Führungsstange löst und sich der Tisch mit der gelösten Elektrode drehen kann, bis eine gewünschte andere Elektrode unter der Führungsstange positioniert ist. Daran schließt sich eine erneute Betätigung der Kupplung und die Verbindung der neuen Elektrode mit der Führungsstange und kann der Tisch aus der Bewegungsbahn der Führungsstange herausbewegt werden, damit der Erodierbetrieb mit der neuen Elektrode fortgesetzt werden kann.

Die Betätigung der Kupplung kann mechanisch und/oder eletrisch betätigt werden. Als Hilfsmittel können Betätigungsarme und dergleichen zum Einsatz kommen. Auch der Antrieb für die Bewegung der Elektrode kann zum Kuppeln/Entkuppeln genutzt werden.

Vorzugsweise wird das Kuppeln und Entkuppeln digital gesteuert. Dies kann bei Verwendung digital steuerbarer Antriebe und gemeinsame Vernetzung der Antriebe mit der Datenverarbeitungsanlage durch die Datenverarbeitungsanlage erfolgen.

Noch weiter bevorzugt findet eine Kupplung Anwendung, die mit der Führungsstange betätigt werden kann. Diese Kupplung reagiert auf Druck, wobei in einer Druckstellung ein Ankuppeln und in einer anderen Druckstellung ein Lösen der Kupplung erfolgt. Die Kupplung ist dazu als Spannfutter ausgebildet, das in der einen Druckstellung aufgeweitet und in der anderen Druckstellung wieder geschlossen wird.

In anderen Ausführungsbeispielen ist ein elektrisch oder hydraulisch betätigbares Spannfutter vorgesehen und erfolgt die Betätigung der Kupplung durch die gemeinsame Datenverarbeitungsanlage.

Eine sehr vorteilhafte Ausführung der Kupplung sieht eine mindestens zweiteilige Ausführung der Kupplung vor. Von den beiden Kupplungsteilen ist ein Teil fest mit der Elektrode verbunden. Der andere Teil ist fest mit der Führungsstange verbunden. Die Kupplung erfolgt dabei zwischen diesen beiden, aus Stahl gefertigten Teilen. Das Spannfutter sitzt in dem führungsstangenseitigen Teil und greift in den elektrodenseitigen Teil. Dabei bildet der elektrodenseitige Teil die Berührungsflächen für das Spannfutter, so daß auch mit relativ großen Spannkräften gearbeitet werden kann, ohne daß eine Beschädigung der Berührungsflächen gefürchtet werden muß.

Günstig ist auch, wenn sich die beiden Teile der Kupplung großflächig aneinander abstützen. Das kann zusätzlich mit einem Ineinandergreifen der beiden Teile mit Stiften und Vertiefungen verbunden sein.

Außerdem kann es vorteilhaft sein, den elektrodenseitigen Kupplungsteil mit dem Spannfutter zu hintergreifen, damit die großfläche Abstützung optimal genutzt wird. Das zusätzliche Ineinandergreifen von Stiften und Vertiefungen verhindert eine Kippbelastung des Spannfutters und bietet darüber hinaus eine Sicherheit gegen eine unerwünschte Relativbewegung des Spannfutters gegenüber der Elektrode und/oder gegenüber der Führungsstange.

Die Steuerung des Wechselvorganges erfolgt vorzugsweise auch im Übrigen durch die Datenverarbeitungsanlage, wobei ein verschleißbedingter Elektrodenwechsel in Abhängigkeit von der Stromaufnahme veranlaßt wird.

In der Zeichnung ist ein Ausführungsbeispiel der Erfindung dargestellt.

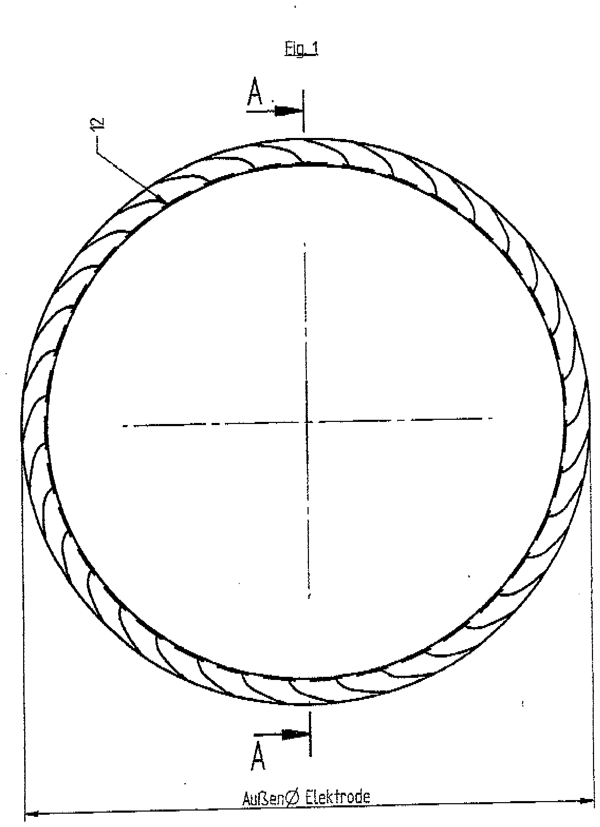

In Fig. 1 bis 3 ist eine scheibenförmige Elektrode 12 aus Graphit dargestellt.

Das Außendurchmessermaß ist mit 13 bezeichnet, das Dickenmaß mit 16.

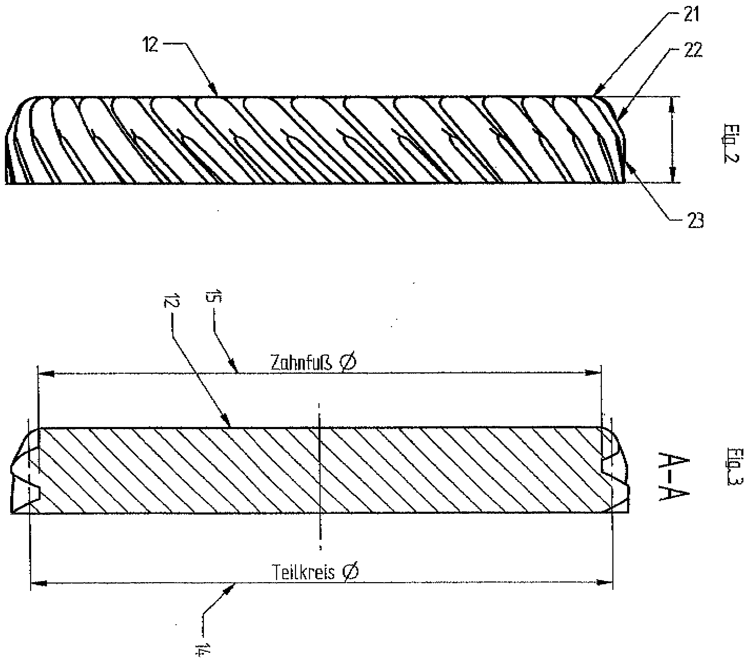

Die Elektrode 12 ist am Rand mit einer Evolventenverzahnung versehen. Die Steigung der Verzahnung ist aus Fig. 2 ersichtlich und verläuft unter 45 Grad zur Mittelachse. Zu der Verzahnung gehören ein Teilkreisdurchmessermaß 14 und ein Fußkreisdurchmessermaß 15.

Weitere Einzelheiten der Verzahnung sind in Fig. 4 und 5 dargestellt.

Die Elektrode 12 ist stirnflächenseitig mit einer Rundung 20 mit dem Radius R versehen. Die Rundung 20 läuft an der Stirnfläche der Elektrode 12 geringfügig unter dem Zahnfuß aus. An der gegenüberliegenden Seite der Rundung 20 schließt sich eine Schräge 20 an,

In anderen Ausführungsbeispielen beträgt die Dicke der scheibenförmigen Elektrode 30 bis 120mm. Die Rundung erstreckt sich am Mantel dieser scheibenförmigen Elektrode über eine Länge zwischen 25% bis 50% der Elektrodendicke erstrecken. Die kleineren Längen gelten vorzugsweise für kleinere Dicken scheibenförmiger Elektroden, die größeren Längen für größere Dicken scheibenförmiger Elektroden. Kleinere Dicken sind in dem Sinne 30mm bis 60 mm und größere Dicken sind in dem Sinne größere Dicken als 60mm bis 120mm.

Bei gleichzeitiger Schrägung und Rundung erstreckt sich die Schrägung vorzugsweise über eine größere Länge als die Rundung.

Soweit vorstehend von einer Erstreckung gesprochen wird, handelt es sich um eine in Richtung der Mittelachse gemessene Länge

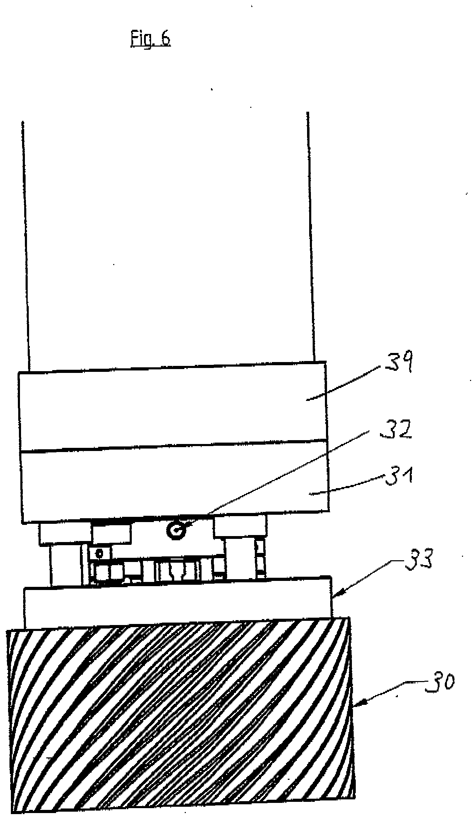

Fig. 6 zeigt eine Elektrode 30 und eine Führungsstange 39, die über eine Kupplung miteinander verbunden sind.

Die Kupplung besteht aus Teilen 31 und 33, von denen das Teil 31 an der Elektrode 30 befestigt ist und das Teil 33 an der Führungsstange 39 befestigt ist, sowie einem Spannfutter 32.

Im Ausfuhrungsführungsbeispiel ist ein hydraulisch betätigtes Spannfutter 32 vorgesehen. Dazu ist in dem Spannfutter 32 eine Kolben/Zylindereinheit vorgesehen, mit der die Spannbacken des Spannfutters 32 bewegt werden. Die zugehörige Hydraulikleitung befindet sich innerhalb der Führungsstange 39. Außerdem sind zwischen den beiden Teilen 31 und 33 drei Stifte vorgesehen. Die Stifte 31 sind gleichmäßig und möglichst weit am Umfang verteilt an dem Teil 31 befestigt und greifen in nicht dargestellte Öffnungen des Teiles 33.

Im Ausführungsbeispiel findet eine Kupplung mit der Elektrode 30 statt, wenn die Elektrode aus einem nicht dargestellten Elektrodenwechsler entnommen werden soll. Dazu ist die Elektrode 30 von dem Elektrodenwechsler unter der Führungsstange 39 und dem Teil 31 positioniert worden. Die Führungsstange 39 und das Teil 31 sind entsprechend hoch aus dem Bad mit der zu erodierenden Buchse gefahren worden. Zur Kopplung werden die Führungsstange 39 und das Teil 31 heruntergefahren, bis die beiden Teile 31 und 33 einander berühren. Dabei greifen die Spannbacken in eine Öffnung des Teiles 33. Dann werden die Spannbacken hydraulisch auseinander gefahren und verriegeln sich in dem Teil 33. Die Stifte und Öffnungen bewirken zugleich eine drehfeste Anordnung.

Zum Wechsel der Elektrode 30 wird die Elektrode 30 mit der Führungsstange 39 aus dem Bad zum Erodieren der Buchse herausgefahren, bis der Elektrodenwechsel zwischen das Bad und die Elektrode 30 fahren und die Elektrode 30 wieder aufnehmen kann. Anschließend wird die Elektrode 30 abgesenkt bis sie von dem Elektrodenwechsel wieder aufgenommen worden ist.

Durch Lösung des Spannfutters 32 wird die Elektrode 30 mit dem Teil 31 frei gegeben. Im einzelnen werden die Spannbacken des Spannfutters 32 zusammengefahren, so daß die Teile 31 und 33 sich voneinander lösen, wenn das Teil 31 mit der Führungsstange angehoben wird.

Das Anheben des Teiles 31 erfolgt mit der Führungsstange 39 und deren Antrieb.

Der Elektrodenwechsler kann dann verfahren werden, bis die ursprüngliche Elektrode den Bereich der Führungsstange verlassen hat und eine neue Elektrode an der Stelle angelangt ist.

## Patentansprüche

1. Verfahren zur Herstellung der Innenverzahnung an Planetwalzenextrudern mit einer Zentralspindel, Planetenspindeln und Gehäuse,
wobei sich die Innenverzahnung unmittelbar im Gehäuse befindet oder in der Gehäuseöffnung eine Buchse vorgesehen ist und die Innenverzahnung sich in der Buchse befindet,
wobei die Planetenspindeln sowohl mit der Zentralspindel als auch mit der Innenverzahnung kämmen und die Planetspindeln um die Zentralspindel und in dem Gehäuse bzw. in der Buchse umlaufen
wobei die Formgebung der Zähne der Innenverzahnung mittels Funkenerosion erfolgt,
wobei eine Elektrode (12,30) verwendet wird, deren Verzahnung der Innenverzahnung des Gehäuses bzw. der Buchse unter Berücksichtigung eines notwendigen Abstandes zwischen dem Gehäuse bzw. der Buches und der Elektrode(12,30) nachgebildet ist,
wobei das Gehäuse bzw. die Buchse in einem flüssigen Dielektrikum steht, so daß beim Einfahren der Elektrode (12,30) in das Gehäuse bzw. beim Einfahren in die Buchse das Dielektrikum den Spalt zwischen Gehäuse bzw. Buchse und der Elektrode (12,30) füllt,
wobei an dem Gehäuse bzw. der Buchse und der Elektrode (12,30) eine elektrische Spannung anliegt, so daß sich Funken von der Innenfläche des Gehäuses bzw. der Buchse lösen und zu der Elektrode (12,30) gelangen und Material aus der Innenfläche des Gehäuses bzw. der Buchse abgetragen wird, wobei eine Elektrode (12,30) mit einer Außenverzahnung verwendet wird, die unter Berücksichtigung des zum Erodieren notwendigen Spaltes mit der Innenverzahnung kämmen kann,
**gekennzeichnet durch** die Verwendung einer Elektrode (12,30), die - beginnend an der Stirnfläche der Elektrode (12,30) - am Elektrodenmantel mit einer Rundung (20) versehen ist, wobei Elektroden (12,30) mit Rundungen (20) mit folgendem Radius verwendet werden
| Baugröße WZ | | Rundungsradius | |
|---|---|---|---|
| minimal | maximal | minimal | maximal |
| 50 | 150 | 2mm | 6mm |
| 150 | 300 | 5mm | 8mm |
| 350 | 400 | 5mm | 10mm |
| 500 | 1000 | 5mm | 20mm |

2. Verfahren nach Anspruch 1
**gekennzeichnet durch** Verwendung einer Elektrode (12,30), deren Rundung (20) am Zahnfuß oder unterhalb des Zahnfußes an der Stirnfläche der Elektrode (12,30) einsetzt.

3. Verfahren nach einem der Ansprüche 1, 2, **dadurch gekennzeichnet, daß** eine Elektrode (12,30) verwendet wird, deren Rundung (20) sich am Mantel einer scheibenförmigen Elektrode (12,30) über 25 bis 50% der Mantellänge erstrecken.

4. Verfahren nach einem der Ansprüche 1, 2, **gekennzeichnet durch** die Verwendung einer Elektrode (12,30), deren Rundung (20) sich am Elektrodenmantel über eine Länge 8 bis 60mm erstrecken, vorzugsweise eine Länge von 8 bis 30 mm bei einer Elektrodendicke von 30 bis 60 mm und eine Länge von 30 bis 60 mm bei einer Elektrodendicke von 60 bis 120mm.

5. Verfahrens nach einem der Ansprüche 1 bis 4, **gekennzeichnet durch** Verwendung einer scheibenförmigen Elektrode (12,30), die an beiden Stirnflächen mit einer Rundung (20) versehen ist, so daß die Elektrode (12,30) in jeder Bewegungsrichtung einen Arbeitshub ausführen kann.

6. Verfahren nach Anspruch 5, **dadurch gekennzeichnet, daß**
a)beim Erodieren mit einer Elektrode (12,30), die wie ein Gewindeschneider durch die Gehäuseöffnung bzw. die Gehäusebuchsenöffnung bewegt wird, zur Durchführung eines weiteren Arbeitshubes die Spannungsdifferenz erhöht wird und/oder die Elektrode (12,30) gewechselt wird
b)beim Erodieren mit Elektroden (12,30), die wie Planetspindeln in der Gehäuseöffnung bzw. der Gehäusebuchsenöffnung bewegt werden, zur Durchführung eines weiteren Arbeitshubes der Abstand zwischen der Innenfläche des Gehäuses bzw. der Buchse und der Elektrode (12,30) verringert wird und/oder die Spannungsdifferenz erhöht wird und/oder die Elektrode (12,30) gewechselt wird.

7. Verfahren nach einem der Ansprüche 1 bis 6, **gekennzeichnet durch** Verwendung einer Elektrode (12,30), deren Führungsstange (39) drehbar und zugleich in Längsrichtung verschiebbar gelagert ist, wobei für die Drehbewegung ein digital gesteuerter Drehantrieb und für die Längsbewegung ein digital gesteuerter Antrieb vorgesehen ist und zur Steuerung beider Antriebe eine elektronische Datenverarbeitungsanlage vorgesehen ist, welche jede Position der Elektrode (12,30) speichert.

8. Verfahren nach einem der Ansprüche 1 bis 7, **dadurch gekennzeichnet, daß** das flüssige Dielektrikum gekühlt wird, vorzugsweise durch Zuführung frischen, gekühlten Dielektrikums, so daß die schmelzflüssig von dem Gehäuse bzw. der Buchse abgetragenen Materialpartikel erstarren und nach unten aus dem Spalt zwischen Gehäuse bzw. Buchse und Elektrode (12,30) austretenden Dielektrikum-Strömung ausfallen.

9. Verfahren nach einem der Ansprüche 1 bis 8, **gekennzeichnet durch** eine Regelung des Zuflusses an flüssigem Dielektrikum anhand des Flüssigkeitsstandes.

10. Verfahren nach einem der Ansprüche 1 bis 9, **gekennzeichnet durch** einen automatischen Elektrodenwechsel, vorzugsweise nach Verschleiß einer Elektrode (12,30) und/oder nach Abschluß einer Grobbearbeitung des Gehäuses bzw. der Buchse zum Beginn der Feinbearbeitung und nach Abschluß einer Feinbearbeitung und Werkstückwechsel zum Beginn der Grobbearbeitung an einem weiteren Gehäuse bzw. weiteren Buchse.

11. Verfahren nach Anspruch 10, **dadurch gekennzeichnet, daß** bei einer Elektrode (12,30), die unter Berücksichtigung des notwendigen Spaltes zwischen der Gehäuseinnenwand bzw. der Gehäusebuchse und der Elektrode (12,30) ein verschleißbedingter Elektrodenwechsel in Abhängigkeit von der Stromaufnahme erfolgt.

12. Verfahren nach Anspruch 11, **dadurch gekennzeichnet, daß** das Erodieren bei Verwendung einer nach Art einer Planetwalzenspindel in der Gehäuseöffnung bzw. in der Gehäusebuchsenöffnung bewegten Elektrode (12,30) in Abhängigkeit von der Stromaufnahme und der Weite des Spaltes zwischen dem Gehäuse bzw. der Buchse und der Elektrode (12,30) geregelt wird, wobei die Spaltweite zur Reduzierung der Stromaufnahme reduziert wird.

13. Verfahren nach Anspruch 12, **dadurch gekennzeichnet, daß** der verschleißbedingte Elektrodenwechsel nach Erreichen einer maximal zulässigen Stromaufnahme in Gang gebracht wird, wenn der Abstand zwischen dem Gehäuse bzw. der Buchse und der Elektrode (12,30) wegen der Abnutzung der Elektrode (12,30) nicht mehr reduzierbar ist.

14. Verfahren nach einem der Anspruch 10 bis 13, **gekennzeichnet durch** die Verwendung einer lösbaren Kupplung (31,33), wobei die Kupplung (31,33) zwischen der Elektrode (12,30) und der Führungsstange (39) angeordnet ist, wobei die Kupplung (31,33) vorzugsweise als Spannfutter (32) ausgebildet ist.

15. Verfahren nach Anspruch 14, **gekennzeichnet durch** die Verwendung eines Wechselroboters, der die zu wechselnde Elektrode (12,30) aufnimmt und entfernt und eine andere Elektrode (12,30) an der Stelle der bisherigen Elektrode (12,30) positioniert, wobei die Elektrode (12,30) nach der Aufnahme im Elektrodenwechsler von der Führungsstange (39) gelöst wird und wobei die Verbindung der neuen Elektrode (12,30) mit dem Spannfutter (32) nach der Berührung mit der Elektrode (12,30) erfolgt.

16. Verfahren nach einem der Ansprüche 1 bis 15, **dadurch gekennzeichnet, daß** das durch Erodieren anfallende Material mit dem Dielektrikum am Behälterboden abgezogen wird und aus dem Dielektrikum ausgefiltert oder ausgesiebt wird.

## Claims

1. Method for the production of the internal toothing on planetary roller extruders with a central spindle, planetary spindles and housing,
wherein the internal toothing is located directly in the housing, or a sleeve is provided in the housing opening and the internal toothing is located in the sleeve,
wherein the planetary spindles mesh both with the central spindle and also with the internal toothing and the planetary spindles revolve around the central spindle and in the housing or in the sleeve
wherein the shaping of the teeth of the internal toothing is effected by means of spark erosion,
wherein the housing or the sleeve is in a liquid dielectric, such that when the electrode (12, 30) is inserted into the housing or when it is inserted into the sleeve, the dielectric fills the gap between the housing or sleeve and the electrode (12, 30),
wherein an electric voltage is applied to the housing or to the sleeve and to the electrode (12, 30), such that sparks are generated from the inner surface of the housing or the sleeve and reach the electrode (12, 30) and material is worn away from the inner surface of the housing or sleeve,
wherein,by taking into account the required gap for the erosion,an electrode (12, 30) with an external toothing is used that can mesh with the internal toothing,
**characterised by** the use of an electrode (12, 30) that - starting at the end face of the electrode (12, 30) - is provided with a curvature (20) on the electrode casing, wherein electrodes (12, 30) are used with curvatures (20) having the following radius
| Tool size | | Radius of curvature | |
|---|---|---|---|
| minimummaximum | | minimummaximum | |
| 50 | 150 | 2mm | 6mm |
| 150 | 300 | 5mm | 8mm |
| 350 | 400 | 5mm | 10mm |
| 500 | 1000 | 5mm | 20mm |

2. Method according to claim 1,**characterised by** the use of an electrode (12, 30), whose curvature (20) is established at the tooth root or below the tooth root on the end face of the electrode (12, 30).

3. Method according to one of claims 1, 2, **characterised in that** an electrode (12, 30) is used whose curvature (20) on the casing of a disc-shaped electrode (12, 30) extends over 25 to 50% of the length of the casing.

4. Method according to one of claims 1, 2, **characterised by** the use of an electrode (12, 30) whose curvature (20) extends over a length of 8 to 60 mm on the electrode casing, preferably a length of 8 to 30 mm for an electrode thickness of 30 to 60 mm, and a length of 30 to 60 mm for an electrode thickness of 60 to 120mm.

5. Method according to one of claims 1 to 4, **characterised by** the use of a disc-shaped electrode (12, 30) that is provided with a curvature (20) on both end faces, such that the electrode (12, 30) can execute a working stroke in each direction of movement.

6. Method according to claim 5, **characterised in that**
a) when eroding with an electrode (12, 30) that is moved like a thread cutter through the housing opening or the housing sleeve openingso as to carry out a further working stroke, the voltage difference is increased and/or the electrode (12, 30) is changed
b) when eroding with electrodes (12, 30) that are moved like planetary spindles in the housing opening or in the housing sleeve opening to carry out a further working stroke, the distance between the inner surface of the housing or sleeve and the electrode (12, 30) is reduced and / or the voltage difference is increased and/or the electrode (12, 30) is changed.

7. Method according to one of claims 1 to 6, **characterised by** the use of an electrode (12, 30) whose guide rod (39) is rotatably mounted and at the same time displaceable in the longitudinal direction, wherein a digitally controlled rotary drive is provided for the rotary movement and a digitally controlled drive is provided for the longitudinal movement, and an electronic data processing unit is provided that stores each position of the electrode (12, 30) for controlling both drives.

8. Method according to one of claims 1 to 7, **characterised in that** the liquid dielectric is cooled, preferably by supplying fresh, cooled dielectric, such that the material particles removed in molten form from the housing or the sleeve solidify and precipitate out of the dielectric that flows downwards out of the gap between the housing or sleeve and the electrode (12, 30).

9. Method according to one of claims 1 to 8, **characterised by** regulating the inflow of liquid dielectric according to the liquid level.

10. Method according to one of Claims 1 to 9, **characterised by** an automatic change of electrodes, preferably after electrode (12, 30) wear and / or after completion of a rough machining of the housing or the sleeve prior to beginning the fine machining, and after completion of the fine machining and workpiece change so as to begin rough machining on another housing or on another sleeve.

11. Method according to claim 10, **characterised in that** for an electrode (12, 30) the wear-related electrode replacement is carried outcontingent on the current consumption, by taking into account the required gap between the inner wall of the housing or of the sleeve and the electrode (12, 30).

12. Method according to claim 11, **characterised in that** the eroding, when using an electrode (12, 30) moved in the manner of a planetary roller spindle in the housing opening or in the housing sleeve opening, is regulated as a function of the current consumption and the width of the gap between the housing or the sleeve and the electrode (12, 30), wherein the gap width is reduced to reduce the current consumption.

13. Method according to claim 12, **characterised in that** the wear-related electrode replacement is initiated after a maximum permissible current consumption is reached when the distance between the housing or the sleeve and the electrode (12, 30) can no longer be reduced due to the wear of the electrode (12, 30).

14. Method according to one of claims 10 to 13, **characterised by** the use of a releasable coupling (31, 33), wherein the coupling (31, 33) is arranged between the electrode (12, 30) and the guide rod (39), wherein the coupling (31, 33) is preferably designed as a chuck (32).

15. Method according to claim 14, **characterised by** the use of a changing robot that picks up the electrode (12, 30) to be changed and removes it and positions another electrode (12, 30) in the place of the previous electrode (12, 30), wherein the electrode (12, 30) after having been picked up in the electrode changer is released from the guide rod (39) and wherein the new electrode (12, 30) is connected to the chuck (32) after contact with the electrode (12, 30).

16. Method according to one of claims 1 to 15, **characterised in that** the material resulting from the erosion is removed with the dielectric at the bottom of the container and is filtered out or sieved out of the dielectric.

## Revendications

1. Procédé pour la fabrication de la denture intérieure d'extrudeuses à rouleaux planétaires avec une broche centrale, des broches planétaires et un boîtier,
selon lequel la denture intérieure se trouve immédiatement dans le boîtier ou un canon est prévu dans l'ouverture du boîtier et la denture intérieure se trouve dans le canon,
selon lequel les broches planétaires s'engrènent aussi bien avec la broche centrale qu'avec la denture intérieure et les broches planétaires tournent autour de la broche centrale et dans le boîtier ou dans le canon,
selon lequel le façonnage des dents de la denture intérieure est produit par étincelage, selon lequel est utilisée une électrode (12, 30) dont la denture est reproduite par la denture intérieure du boîtier ou du canon en tenant compte d'unedistance nécessaire entre le boîtier ou le canon et l'électrode (12, 30),
selon lequel le boîtier ou le canon se trouve dans unproduitdiélectrique liquide, de sorte que, lors de l'insertion de l'électrode (12, 30) dans le boîtier ou de son insertion dans le canon, le produitdiélectrique remplit l'interstice entre le boîtier ou le canon et l'électrode (12, 30), selon lequel une tension électrique est appliquée au boîtier ou au canon et à l'électrode (12, 30), de sorte que des étincelles se détachent de la face intérieure du boîtier ou du canon et atteignent l'électrode (12, 30) et que de la matière est extraite de la face intérieure du boîtier ou du canon,
et selon lequel il est utilisé une électrode (12, 30) avec une denture extérieure qui peut entrer en prise avec la denture intérieure en tenant compte de l'interstice nécessaire pour l'érosion, **caractérisé par** l'utilisation d'une électrode (12, 30) qui - en commençant par la face frontale de l'électrode (12, 30) - est dotée au niveau de la gaine d'électrode d'une courbure (20), des électrodes (12, 30) avec des courbures (20) ayant le rayon suivant étant utilisées :
| Taille WZ | | Rayon de courbure | |
|---|---|---|---|
| minimum | maximum | minimum | maximum |
| 50 | 150 | 2 mm | 6 mm |
| 150 | 300 | 5 mm | 8 mm |
| 350 | 400 | 5 mm | 10 mm |
| 500 | 1000 | 5 mm | 20 mm |

2. Procédé selon la revendication 1,**caractérisé par** l'utilisation d'une électrode (12, 30) dont la courbure (20) est située au niveau du pied de dent ou au-dessous du pied de dent sur la face frontale de l'électrode (12, 30).

3. Procédé selon une des revendications 1, 2, **caractérisé en ce qu'**est utilisée une électrode (12, 30) dont la courbure (20) s'étendentau niveau de la gaine d'une électrode en forme de disque (12, 30) sur 25 à 40% de la longueur de la gaine.

4. Procédé selon une des revendications 1, 2, **caractérisé par** l'utilisation d'une électrode (12, 30) dont la courbure (20) s'étendentau niveau de la gaine d'électrode sur une longueur de 8 à 60 mm, de préférence une longueur de 8 à 30 mm pour une épaisseur d'électrode de 30 à 60 mm et une longueur de 30 à 60 mm pour une épaisseur d'électrode de 60 à 120 mm.

5. Procédé selon une des revendications 1 à 4, **caractérisé par** l'utilisation d'une électrode en forme de disque (12, 30) qui est dotée d'une courburesur les deux faces frontales, de sorte que l'électrode (12, 30) peut effectuer une passe de travail dans chaque direction de déplacement.

6. Procédé selon la revendication 5, **caractérisé en ce que**
a) lors de l'érosion avec une électrode (12, 30) qui est déplacée comme un taraud à travers l'ouverture de boîtier ou l'ouverture de canon de boîtier, le différentiel de tension est augmenté et/ou l'électrode (12, 30) est remplacéepour réaliser d'une autre passe de travail
b) lors de l'érosion avec des électrodes (12, 30) qui sont déplacées comme des broches planétaires à travers l'ouverture de boîtier ou l'ouverture de canon de boîtier, la distance entre la face intérieure du boîtier ou du canon et l'électrode (12, 30) est réduite et/ou le différentiel de tension est augmenté et/ou l'électrode (12/30) est remplacéepour réaliser une autre passe de travail.

7. Procédé selon une des revendications 1 à 6, **caractérisé par** l'utilisation d'une électrode (12, 30) dont la tige de guidage (39) est montée de façon à la fois pivotante et coulissante dans la direction longitudinale, selon lequel pour le mouvement de pivotement il est prévu un entraînement pivotant à commande numérique et pour le mouvement longitudinal un entraînement à commande numérique et pour la commande des deux entraînements il est prévu un dispositif de traitement de données électronique qui mémorise chaque position de l'électrode (12, 30).

8. Procédé selon une des revendications 1 à 7, **caractérisé en ce que** le produit diélectrique liquide est refroidi, de préférence par l'alimentation en produit diélectrique frais refroidi, de sorte que les particules de matière extraites en fusion du boîtier ou du canon de solidifient et tombent vers le flux de produit diélectrique sortant de l'interstice entre le boîtier ou le canon et l'électrode (12, 30).

9. Procédé selon une des revendications 1 à 8, **caractérisé par** une régulation de l'afflux de produit diélectrique liquide à l'aide du niveau de liquide.

10. Procédé selon une des revendications 1 à 9, **caractérisé par** un remplacement d'électrode automatique, de préférence après l'usure d'une électrode (12, 30) et/ou après l'achèvement d'un usinage grossier du boîtier ou du canon pour commencer l'usinage fin et après l'achèvement d'un usinage fin et un remplacement de pièce pour commencer l'usinage grossier d'un autre boîtier ou d'un autre canon.

11. Procédé selon la revendication 10, **caractérisé en ce qu'**avec une électrode (12, 30) quien tenant compte de l'interstice nécessaire entre la paroi intérieure du boîtier ou du canon de boîtier et l'électrode (12, 30), un remplacement d'électrode dû à l'usure a lieu en fonction du courant absorbé.

12. Procédé selon la revendication 11, **caractérisé en ce que**,lors de l'utilisation d'une électrode (12, 30) de type broche à rouleaux planétaires mue dans l'ouverture de boîtier ou dans l'ouverture de canon de boîtier, l'érosion est régulée en fonction du courant absorbé et de la largeur de l'interstice entre le boîtier ou le canon et l'électrode (12, 30), la largeur de l'interstice étant réduite pour réduire le courant absorbé.

13. Procédé selon la revendication 12, **caractérisé en ce que** le remplacement d'électrode dû à l'usure est effectué après avoir atteint un courant absorbé maximum autorisé, quand la distance entre le boîtier ou le canon et l'électrode (12, 30) ne peut plus être réduite à cause de l'usure de l'électrode (12, 30).

14. Procédé selon une des revendications 10 à 13, **caractérisé par** l'utilisation d'un accouplement détachable (31, 33), selon lequel l'accouplement (31, 33) est disposé entre l'électrode (12, 30) et la tige de guidage (39), l'accouplement (31, 33) étant de préférence configuré comme un mandrin de serrage (32).

15. Procédé selon la revendication 14, **caractérisé par** l'utilisation d'un robot de remplacement qui prend et enlève l'électrode (12, 30) à remplacer et positionne une autre électrode (12, 30) à la place de l'ancienne électrode (12, 30), selon lequel l'électrode (12, 30) est détachée de la tige de guidage (39) après avoir été prise par le robot de remplacement d'électrode et selon lequel la liaison de la nouvelle électrode (12, 30) avec le mandrin de serrage (32) a lieu après la mise en contact avec l'électrode (12, 30).

16. Procédé selon une des revendications 1 à 15, **caractérisé en ce que** la matière résultant de l'érosion est évacuée avec le produit diélectrique dans le fond de cuve et est séparée du produit diélectrique par filtrage ou par tamisage.
